# EUROPÄISCHE PATENTSCHRIFT

(11) **EP 1 125 175 B1**
(45) Veröffentlichungstag und Bekanntmachung des Hinweises auf die Patenterteilung: **24.07.2002**
(21) Anmeldenummer: 99957879.2
(22) Anmeldetag: 11.10.1999
(51) Int. Cl.: G05D 1/02, A47L 11/00

(54) **ABSTURZSICHERES AUTONOMES FAHRSYSTEM MIT BEGRENZUNGSMARKEN**
SELF-CONTAINED ANTI-CRASH MOBILE SYSTEM USING LIMIT MARKERS
SYSTEME MOBILE AUTONOME ANTI-CHUTE AVEC REPERES DE DELIMITATION

(30) Priorität: 23.10.1998 DE 29818922 U
(43) Veröffentlichungstag der Anmeldung: 22.08.2001
(73) Patentinhaber: Siemens Aktiengesellschaft, 80506 München (DE)
(72) Erfinder: WIEGAND, Hermann-Josef, D-91083 Baiersdorf (DE)
(86) Internationale Anmeldenummer: DE9903264
(87) Internationale Veröffentlichungsnummer: WO0025186

(56) Entgegenhaltungen:
- EP-A- 0 774 702
- US-A- 5 165 064

## Beschreibung

Die Erfindung betrifft eine autonomes Fahrsystem, welches selbstfahrende Mobileinheiten enthält. Ein derartiges autonomes Fahrsystem kann z.B. in Form eines sogenannten fahrerlosen Transportsystems für verschiedenste Aufgaben eingesetzt werden. Als eine von vielen Anwendungen dieser Art soll beispielhaft der Transport einer Reinigungseinrichtung angeführt werden. Solche Fahrsysteme werden auch autonome Reinigungsroboter genannt.

Fahrsysteme älterer Bauart weisen kontaktlose Führungsmittel auf, welche im Boden des jeweiligen Fahrbereiches eingelassen sind, z.B. in einer Industriehalle. Diese dienen als eine Art elektronischer Schiene bzw. Spur, z.B. auf magnetischer Basis, für die selbstfahrenden Mobileinheiten des Fahrsystems.

Bei Fahrsystemen neuerer Bauart bewegen sich die selbstfahrenden Mobileinheiten, welche auch als mobile Roboter bezeichnet werden können, in einem zugewiesenen Fahrbereich quasi autonom unter der Führung einer in der Regel programmgeführten Steuereinrichtung. Diese tastet einen zumindest in Fahrtrichtung vor einer Mobileinheit liegenden Erfassungsbereich mittels einer berührungslosen Raumabtasteinrichtung ab. Dabei kann es sich um einen Pulslaserscanner oder ein Ultraschallsensorsystem handeln. Die Steuereinrichtung führt ein Navigationsprogramm aus, welches z.B. im Falle eines autonomen Reinigungsroboters die Aufgabe hat, die Mobileinheit mit möglichst gleichmäßiger Abdeckung über den gesamten Fahrbereich zu bewegen, damit die mitgeführte Reinigungseinrichtung die vorgesehene Reinigungsaufgabe ausführen kann.

Die programmgeführte Steuereinrichtung führt in der Regel zusätzlich zu dem Navigationsprogramm auch einen Algorithmus aus, welcher eine Kollision einer Mobileinheit mit Objekten vermeidet, die im Erfassungsbereich detektiert werden. Bei beweglichen Objekten, z. B. Personen, kann der Algorithmus zur Kollisionsvermeidung die Mobileinheit vorübergehend still setzen, bis das bewegliche Objekt den Erfassungsbereich verlassen hat. Bei feststehenden Objekten, z. B. Gegenständen und Gebäudeteilen, werden unter Umständen Umfahrungen ausgeführt.

Eine weitere, möglicherweise auch von öffentlichen Aufsichtsbehörden geforderte Sicherheitsfunktion für autonome Fahrsysteme besteht darin, dass die Mobileinheiten des autonomen Fahrsystems unter allen Umständen gegen einen Absturz gesichert werden sollten. Dabei tritt die Gefahr eines Absturzes in der Regel erst dann auf, wenn z. B. auf Grund eines Fehlers bzw. einer Unregelmäßigkeit bei der Ausführung des normalen Navigationsprogramms eine Mobileinheit in eine an sich nicht vorgesehene Position gelangt.

Zur Absturzsicherung kann das Fahrsysteme zusätzliche bauliche Maßnahmen zur konstruktiven Begrenzung des zugewiesenen Fahrbereiches aufweisen, z. B. Gitter und Absperrungen. Dabei tritt aber das Problem auf, dass derartige mechanische Begrenzungen nicht nur aufwendig sind, sondern in vielen Fällen an potentiellen Absturzbereichen, z. B. Treppen, Rampen, Bahnsteigen, aus praktischen Gründen nicht aufstellbar sind.

Aus EP-A-0 774 702 ist ein System bekannt, mit dessen Hilfe ein automatisierter Roboter die Grenzen seines Betriebsbereichs erkennt. Die Grenzen sind dabei mit magnetischen Marken versehen, welche von einem auf dem Roboter montierten Magnetsensor detektiert werden können.

In US-A-5 165 064 wird ein mobiler Roboter beschrieben, der die Umgebung mit Ultraschall- und Infrarotsignalen abtastet und durch in der Umgebung installierte Infrarot-Baken seine Position bestimmen kann.

Der Erfindung liegt die Aufgabe zu Grunde, ein autonomes Fahrsystem, dessen mindestens eine Mobileinheit zumindest mit einer Steuereinrichtung und einer berührungslosen Raumabtasteinrichtung ausgerüstet ist, weiter so auszubilden, dass eine Absturzsicherung der Mobileinheit mit einem möglichst minimalen zusätzlichen Aufwand möglich ist.

Die Aufgabe wird gelöst mit einem autonomen Fahrsystem, welches die im Anspruch 1 aufgeführten Merkmale aufweist.

Das absturzsichere autonome Fahrsystem gemäß der Erfindung enthält Begrenzungsmarken, welche im Fahrbereich räumlich verteilt angeordnet sind. Ferner enthält die mindestens eine selbstfahrende Mobileinheit des Fahrsystems eine berührungslose Raumabtasteinrichtung mit einem Erfassungsbereich, in dem die Raumabtasteinrichtung zumindest den vor der Mobileinheit in Fahrtrichtung liegenden Fahrbereich abtastet. Des weiteren enthält die mindestens eine selbstfahrende Mobileinheit des Fahrsystems eine programmgeführte Steuereinrichtung, welche mit der Raumabtasteinrichtung verbunden ist und die Mobileinheit stillsetzt, wenn die Raumabtasteinrichtung in einem ersten Sicherungsteilbereich des Erfassungsbereiches mindestens eine Begrenzungsmarke erfaßt.

Das erfindungsgemäße System beruht darauf, daß als ein Sicherheitskriterium gegen einen Absturz mindestens keine Begrenzungsmarke innerhalb des ersten Sicherungsteilbereichs des Erfassungsbereiches liegen und von der Steuereinrichtung detektiert werden darf. Ist diese Bedingung erfüllt, kann die Mobileinheit von der Steuereinrichtung nach der insbesondere von der Art der Mobileinheit abhängigen Navigationsstrategie unbeeinträchtigt bewegt werden. Das erfindungsgemäße System kann folglich anschaulich mit einer virtuellen optischen Barriere verglichen werden, welche erst aktiv wird, wenn die Mobileinheit durch Begrenzungsmarken bestimmte virtuelle Grenzen erreicht hat. Die erfindungsgemäße Absturzsicherung kann somit uneingeschränkt additiv neben weiteren, in der Regel bereits vorhandenen und auf die Steuereinrichtung einwirkenden Navigations- und Sicherungprogrammen eingesetzt werden.

Eine derartige Ausführung weist den weiteren Vorteil auf, daß zur Erzielung der zusätzlichen Funktion der Absturzsicherung an vorhandenen, selbstfahrenden Mobileinheit keine äußerlichen, konstruktiven Veränderungen vorgenommen werden müssen. Vielmehr ist die Funktion der Absturzsicherung durch programmtechnische Anpassungen der Steuereinrichtung implementierbar. Diese Anpassungen sind in der Praxis auf einfache Weise durch Laden von Programmbestandteilen durchführbar.

Es ist weiterhin besonders vorteilhaft, daß die Absturzsicherung dadurch erzielt wird, daß in dem Erfassungsbereich der Raumabtasteinrichtung, welcher in aller Regel ohnehin zum Zwecke der normalen Navigation und/oder Kollisionsvermeidung vorhanden und von der programmgeführten Steuereinrichtung entsprechend ausgewertet wird, eine zusätzlicher, entsprechend gestalteter Sicherungsteilbereich definiert ist. Das Programm der Steuereinrichtung wertet also dieses spezielle Segment des Erfassungsbereiches gesondert mit Ziel der Sicherung der Mobileinheit gegen Absturz aus.

Ein weitere Vorteil der Erfindung wird darin gesehen, daß die im Fahrbereich räumlich verteilt angeordneten Begrenzungsmarken keine künstlichen Hindernisse insbesondere für Personen darstellen. Vielmehr können diese z.B. an Gebäudeteilen, wie z.B. Wänden, Säulen, Decken u.dgl. ohne Beeinträchtigung vorhandener Raum- und Bewegungsstrukturen angebracht werden. Auf Grund der Ausdehnung des Erfassungsbereiches und des darin befindlichen Sicherungsteilbereichs müssen die Begrenzungsmarken nicht in unmittelbarer räumlicher Nähe einer potentiellen Absturzstelle der Mobileinheit angebracht sein. Vielmehr können diese um eine maximale Ausdehnung des Sicherungsteilbereichs, d.h. quasi der maximalen Ausdehnung der virtuellen optischen Barriere des Systems, entfernt sein. Stellt die potentielle Absturzstelle z.B. ein Treppenpodest dar, so ist dessen Begehbarkeit für Personen nicht durch Begrenzungsmarken des erfindungsgemäßen Fahrsystems beeinträchtigt.

Weitere, vorteilhafte Ausführungsformen der Erfindung sind in den Unteransprüchen enthalten.

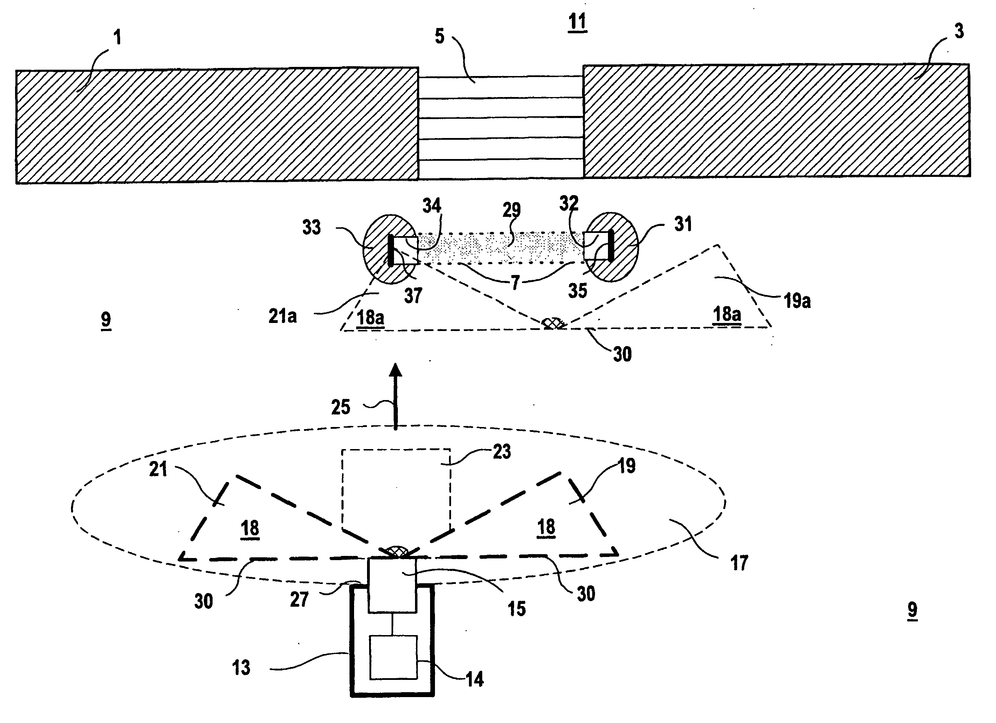

Die Erfindung wird desweiteren anhand eines, in der Figur dargestellten Ausführungsbeispieles weiter erläutert. Dabei zeigt die Figur in Draufsicht eine Mobileinheit, die auf einem Fahrbereich gemäß der Erfindung absturzsicher geführt wird, wobei der Fahrbereich beispielhaft einen Stufenbereich als potentiellen Absturzbereich aufweist.

Die Figur zeigt in Draufsicht einen Fahrbereich 9, welcher sich z.B. im Inneren eines Gebäudes bzw. einer Halle befinden kann. Dieser ist beispielhaft durch einzelne Wandbereiche 1,3 bautechnisch begrenzt. Im Beispiel der Figur bildet dieser Selbstfahrbereich 9 ein erhöhtes Fahrniveau für eine beispielhafte, selbstfahrende Mobileinheit 13. Dieser ist von einem weiteren, z.B. erniedrigten Flächenbereich 11 über einen treppenartigen Stufenbereich 5 getrennt. Das erfindungsgemäße autonome Fahrsystem sorgt dafür, daß die selbstfahrende Mobileinheit 13 den Stufenbereich 5, welche einen potentiellen Absturzbereich darstellt, keinesfalls überfährt.

Erfindungsgemäß sind in der Figur exemplarisch zwei Begrenzungsmarken 35,37 beispielhaft in der Nähe des gefährdenden Absturzbereiches 5 räumlich verteilt angeordnet. Selbstverständlich können weitere, in der Figur nicht gezeigte Begrenzungsmarken vorhanden sein, welche zur Sicherung weitere potentieller Absturzbereiche räumlich verteilt sind. Im Beispiel der Figur sind die Begrenzungsmarken 35,37 vorteilhaft annähernd gegenüberliegend vor dem Stufenbereich 5 angeordnet, welcher einen tunnelförmigen Absturzbereich darstellt. Die annähernd beidseitig neben dem Zugang zum Absturzbereich angeordneten Begrenzungsmarken 35,37 bilden dabei für die Mobileinheit eine Art Sperrbereich 29, welcher annähernd dem Durchgangsbereich für Personen entspricht.

Die selbstfahrende Mobileinheit 13, welche sich im Beispiel der Figur in einer noch relativ weit von den Begrenzungsmarken 35,37 entfernten ungefährdeten Position befindet, enthält eine berührungslose Raumabtasteinrichtung 15 mit einem Erfassungsbereich 17. Die Raumabtasteinrichtung 15, bevorzugt ein Pulslaserscanner, ist am Kopfende 27 der Mobileinheit 13 angebracht und insbesondere über einen Datenbus mit einer Steuereinrichtung 14 verbunden. Der Erfassungsbereich 17 weist im Beispiel der Figur einen ovalen Querschnitt auf. Der in dem Erfassungsbereich 17 zumindest vor der Mobileinheit 13 in Fahrtrichtung 25 liegende Ausschnitt des Fahrbereiches 9 wird durch die Raumabtasteinrichtung 15 abgetastet. Bei der im Beispiel der Figur vorliegenden Position der Mobileinheit 13 befindet sich keine Begrenzungsmarke im Erfassungsbereich 17. Die Mobileinheit 13 kann also durch Bearbeitung eines Navigationsprogrammes in der Steuereinrichtung entsprechend ihrer Funktion auf dem Fahrbereich bewegt werden.

Erfindungsgemäß wird von der programmgeführten Steuereinrichtung 14 in der Mobileinheit 13 nur ein Teil des Erfassungsbereiches 17 zum Zwecke der Absturzsicherung ausgewertet. Dieser weist im Beispiel der Figur das Bezugszeichen 18 auf und wird nachfolgend als erster Sicherungsteilbereich bezeichnet. Vorteilhaft weist der erste Sicherungsteilbereich 18 jeweils eine annähernd beidseitig von der Fahrtrichtung 25 der Mobileinheit 13 abgewandte rechte und linke Erfassungskeule 19 und 21 auf. Die maximalen Ausdehnung beider Erfassungskeulen quer zur Fahrtrichtung ist mit dem Bezugszeichen 33, und die maximale Ausdehnung einer jeden Erfassungskeule in Fahrtrichtung ist mit dem Bezugszeichen 29 gekennzeichnet.

Erfindungsgemäß wird die Mobileinheit 13 von der Steuereinrichtung stillgesetzt, wenn auf Grund deren Bewegungen eine Begrenzungsmarke in den ersten Sicherungsteilbereich 18 des Erfassungsbereiches 17 eintritt und von der Raumabtasteinrichtung 15 erfaßt wird. Vorteilhaft wird die Mobileinheit 13 bei Erfassung zumindest einer der Begrenzungsmarken 35 bis 37 zwangsweise endgültig stillsetzt, so daß eine Wiederinbetriebnahme der Mobileinheit z.B. erst nach einem Eingriff bzw. einer Überprüfung durch eine Bedienperson möglich ist.

Im Beispiel der Figur ist zur Veranschaulichung dieses Falles zusätzlich in strichlierter Linie zusätzlich ein Sicherungsteilbereich 18a ohne die dazugehörige Mobileinheit in einer zweiten Position dargestellt, welche unmittelbar vor dem durch die Begrenzungsmarken 31,33 aufgespannten Sperrbereich 29 liegt. Dabei liegt beispielhaft die Begrenzungsmarke 37 in der linken Erfassungskeule 21a des Sicherungsteilbereichs 18a und wird somit von der Raumabtasteinrichtung 15 und der Steuereinrichtung 14 erkannt. Dies hat eine Stillsetzung der Mobileinheit zur Verhinderung eines Absturzes zur Folge.

Die maximale Ausdehnung 30 des ersten Sicherungsteilbereichs 18 insbesondere quer zur Fahrtrichtung 25 der Mobileinheit 13 bestimmt quasi die Breite der "optischen Barriere" des erfindungsgemäßen Fahrsystems im Rahmen der Absturzsicherung. Vorteilhaft ist der Abstand 7 benachbarter Begrenzungsmarken 31,33 kleiner als die maximale Ausdehnung 30 des ersten Sicherungsteilbereichs 18 quer zur Fahrtrichtung 25. Wie besonders deutlich an der strichlierten Position des vorgerückten Erfassungsbereiches 18a zu erkennen ist, ist es bei derartigen Abmessungen des Sicherungsteilbereichs 18 ausgeschlossen, daß eine Mobileinheit z.B. durch eine fehlerhafte Navigation in den Sperrbereich 29 und somit in eine absturzgefährdete Position gerät. Ferner bestimmen die Ausdehnungen insbesondere der rechten und linken Erfassungskeulen 19 bzw. 19a und 21 bzw. 21a des ersten Sicherungsteilbereichs 18 bzw. 18a in Fahrtrichtung 25 den Vorlauf einer Stillsetzung der Mobileinheit bei Absturzgefahr, und sind insbesondere auf die aktuelle Geschwindigkeit der Mobileinheit abzustimmen.

Gemäß einer weiteren Ausführung weist das absturzsichere autonome Fahrsystem vorteilhaft Träger zur Halterung von Führungsmarken auf, welche derart ausgestaltet und/oder angebracht sind, daß eine Begrenzungsmarke nur dann vom Erfassungsbereich 17 einer Mobileinheit 13 detektierbar ist, wenn diese sich in unmittelbarer räumlicher Nähe der Begrenzungsmarke befindet. Derartige Träger sind bevorzugt säulen- bzw. halbkugelförmig gestaltet und an Decken bzw. Tragteilen von Gebäuden angebracht, bzw. im Boden des Fahrbereiches eingelassen. Wie im Beispiel der Figur bereits dargestellt, weisen die dortigen Träger 31,33 vorteilhaft zusätzliche Abschattungsmittel für die Begrenzungsmarken 35,37 insbesondere in Form von Aufnahmemulden 32,34 bzw. seitliche Abdeckungen auf. Diese bewirken, daß die Begrenzungsmarken 35,37 von der Raumabtasteinrichtung 15 einer räumlich entfernt plazierten Mobileinheit 13 nicht detektiert werden können. Für deren Detektion ist vielmehr eine so starke unmittelbare räumliche Nähe der Mobileinheit erforderlich, daß die Abschattungsmittel von deren Sicherteilbereich quasi hinterstrahlt werden. Der strichlierte Sicherteilbereich 18a in der Figur zeigt einen solchen Fall am Beispiel der linken Erfassungskeule 21a.

Die Begrenzungsmarken selbst können z.B. in Form einer Folie ausgebildeten sein, welche auf die Außenseite eines Trägers aufgelegt oder in die Mulde eines Abschattungsmittels eingelegt ist. Ferner können die Oberflächen von Begrenzungsmarken so gestaltet sein, daß diese von der Raumabtasteinrichtung, z.B. einem Pulslaserscanner, und der Steuereinrichtung einer Mobileinheit nicht nur als Marken im allgemeinen, sondern konkret als Begrenzungsmarken detektierbar sind, welche zur Absturzsicherung dienen. Hierdurch können diese Marken durch das Fahrsystem automatisch von anderen Marken unterschieden werden, welche im Fahrbereich zu einem weiteren, nicht der Absturzsicherung dienenden Zweck angeordnet sind.

Wie oben bereits ausgeführt, können im Erfassungsbereich 17 der Raumabtasteinrichtung 15 auch weitere Segmente definiert und von der Steuereinrichtung zu anderen Zwecken ausgewertet werden, z.B. zur Kollisionsvermeidung. Im Beispiel der Figur enthält der Erfassungsbereich 17 annähernd unmittelbar in Fahrtrichtung 25 der Mobileinheit 13 einen zweiten Sicherungsteilbereich 23. Hierbei wird die Mobileinheit 13 von der Steuereinrichtung 14 zwangsweise vorübergehend stillgesetzt, wenn die Raumabtasteinrichtung 15 einen im zweiten Sicherungsteilbereich 18 befindlichen Körper erfaßt. Nach Entfernung des Körpers kann sich die Mobileinheit vorteilhaft selbständig wieder in Bewegung setzten.

## Patentansprüche

1. Autonomes Transportsystem, mit
a) Begrenzungsmarken (35, 37), welche in einem Fahrbereich (9) räumlich verteilt angeordnet sind,
b) mindestens einer selbstfahrenden Mobileinheit (13), welche enthält
b1) eine berührungslose Raumabtasteinrichtung (15) mit einem Erfassungsbereich (17), in dem die Raumabtasteinrichtung (15) zumindest den vor der Mobileinheit (13) in Fahrtrichtung (25) liegenden Fahrbereich (9) abtastet, und
b2) eine programmgeführte Steuereinrichtung (14), welche mit der Raumabtasteinrichtung (15) verbunden ist und die Mobileinheit (13) mittels Navigationsund Sicherungsprogrammen steuert,
**dadurch gekennzeichnet,**
**dass** innerhalb des Erfassungsbereichs (17) ein erster Sicherungsteilbereich (18) definiert ist und die Steuereinrichtung (14) die Mobileinheit (13) mittels einer additiv neben den auf die Steuereinrichtung (14) einwirkenden Navigations- und Sicherungsprogrammen eingesetzten, durch programmtechnische Anpassungen der Steuereinrichtung (14) implementierten Absturzsicherung stillsetzt, wenn die Raumabtasteinrichtung (15) im ersten Sicherungsteilbereich (18) mindestens eine Begrenzungsmarke (35, 37) erfasst.

2. Absturzsicheres autonomes Transport system nach Anspruch 1, wobei die Steuereinrichtung (14) die Mobileinheit (13) bei Erfassung zumindest einer Begrenzungsmarke (35, 37) zwangsweise endgültig stillsetzt.

3. Absturzsicheres autonomes Transportsystem nach Anspruch 1 oder 2, wobei der erste Sicherungsteilbereich (18) jeweils eine annähernd beidseitig von der Fahrtrichtung (25) der Mobileinheit (13) abgewandte rechte und linke Erfassungskeule (19,21) aufweist.

4. Absturzsicheres autonomes Transportsystem nach einem der vorangegangenen Ansprüche, wobei der Abstand (7) benachbarter Begrenzungsmarken (35,37) kleiner ist als eine maximale Ausdehnung (30) des ersten Sicherungsteilbereichs (18), insbesondere annähernd quer zur Fahrtrichtung (25) der Mobileinheit (13).

5. Absturzsicheres autonomes Transportsystem nach einem der vorangegangenen Ansprüche, mit Trägern (31,33) zur Halterung von Begrenzungsmarken (35,37), welche derart ausgestaltet und/oder angebracht sind, daß eine Begrenzungsmarke (35,37) nur vom Erfassungsbereich (17) einer in unmittelbarer räumlicher Nähe befindlichen Mobileinheit (13) erfaßt werden kann.

6. Absturzsicheres autonomes Transportsystem nach Anspruch 5, wobei die Träger (31,33) Abschattungsmittel (32,34) für die Begrenzungsmarken (35,37), insbesondere Aufnahmemulden bzw. seitliche Abdeckungen, gegen eine räumlich entfernte Erfassung durch die Raumabtasteinrichtung (15) einer Mobileinheit (13) aufweisen.

7. Absturzsicheres autonomes Transportsystem nach einem der vorangegangenen Ansprüche, wobei im Fahrbereich (9) zumindest zwei Begrenzungsmarken (35,37) vor einem insbesondere tunnelförmigen Absturzbereich (5) gegenüberliegend angeordnet sind.

8. Absturzsicheres autonomes Transportsystem nach einem der vorangegangenen Ansprüche, wobei
a) der Erfassungsbereich (17) annähernd unmittelbar in Fahrtrichtung (25) der Mobileinheit (13) einen zweiten Sicherungsteilbereich (18) aufweist, und
b) die Steuereinrichtung (14) die Mobileinheit (13) zwangsweise vorübergehend stillsetzt, wenn die Raumabtasteinrichtung (15) einen im zweiten Sicherungsteilbereich (18) befindlichen Körper erfaßt.

## Claims

1. Autonomous transportation system with
a) limiting markers (35, 37) which are arranged in spatially distributed fashion in a travelling area (9),
b) at least one automated guided mobile unit (13) which contains
b1) a contact-free spatial scanning device (15) with a detection zone (17) in which the spatial scanning device (15) at least scans the travelling area (9) lying ahead of the mobile unit (13) in the direction of travel (25), and
b2) a program-guided control device (14) which is connected to the spatial scanning device (15) and controls the mobile unit (13) by means of navigation and protection programs,
**characterised in that**
a first protection sub-area (18) is defined within the detection zone (17) and the control device (14) brings the mobile unit (13) to a halt by means of a crash protection functionality employed as an additional feature alongside the navigation and protection programs acting on the control device (14) and implemented by adapting the programming of the control device (14) when the spatial scanning device (15) detects at least one limiting marker (35, 37) in the first protection sub-area (18).

2. Crash-proof autonomous transportation system according to Claim 1, whereby the control device (14) forces the mobile unit (13) to come to an absolute halt upon detection of at least one limiting marker (35,37).

3. Crash-proof autonomous transportation system according to Claim 1 or 2, whereby the first protection sub-area (18) has a right-hand and a left-hand sensing lobe (19,21) facing away approximately on both sides from the direction of travel (25) of the mobile unit (13).

4. Crash-proof autonomous transportation system according to one of the preceding claims, whereby the distance (7) between adjacent limiting markers (35,37) is less than the maximum extent (30) of the first protection sub-area (18), particularly approximately crosswise with respect to the direction of travel (25) of the mobile unit (13).

5. Crash-proof autonomous transportation system according to one of the preceding claims, with supports (31,33) acting as retaining units for limiting markers (35,37), which are shaped and/or mounted such that a limiting marker (35,37) can only be detected by the detection zone (17) of a mobile unit (13) when the latter is in its immediate spatial vicinity.

6. Crash-proof autonomous transportation system according to Claim 5, whereby the supports (31,33) exhibit additional shadowing facilities (32,34) for the limiting markers (35,37), particularly in the form of receiving cavities or side covers, preventing them from being detected by the spatial scanning device (15) of a mobile unit (13) positioned at a spatially removed location.

7. Crash-proof autonomous transportation system according to one of the preceding claims, whereby at least two limiting markers (35,37) are located opposite one another in the travelling area (9) in front of a particularly tunnel-shaped crash area (5).

8. Crash-proof autonomous transportation system according to one of the preceding claims, whereby
a) the detection zone (17) contains a second protection sub-area (18) approximately directly in the direction of travel (25) of the mobile unit (13),
b) the control device (14) forces the mobile unit (13) to come to a temporary halt when the spatial scanning device (15) detects a body situated in the second protection sub-area (18).

## Revendications

1. Système autonome de transport, comprenant
a) des repères de délimitation (35, 37) agencés avec répartition spatiale dans une zone de déplacement (9),
b) au moins une unité automobile (13) renfermant
b1) un dispositif (15) d'exploration spatiale sans contact, muni d'une zone détectrice (17) dans la-quelle ledit dispositif (15) d'exploration spatiale explore au moins la zone de déplacement (9) située devant l'unité mobile (13) dans la direction de déplacement (25), et
b2) un dispositif de commande (14) piloté par programme, qui est raccordé au dispositif (15) d'exploration spatiale et commande l'unité mobile (13) au moyen de programmes de navigation et de sûreté,
**caractérisé par le fait**
**qu'**une première plage partielle de sûreté (18) est définie à l'intérieur de la zone détectrice (17), et le dispositif de commande (14) met l'unité mobile (13) à l'arrêt, au moyen d'une sûreté antichute utilisée en plus des programmes de navigation et de sûreté agissant sur le dispositif de commande (14), et activée par des adaptations techniques programmées dudit dispositif de commande (14), lorsque le dispositif (15) d'exploration spatiale détecte au moins un repère de délimitation (35, 37) dans la première plage partielle de sûreté (18).

2. Système autonome de transport antichute selon la revendication 1, dans lequel le dispositif de commande (14) provoque la mise à l'arrêt définitive de l'unité mobile (13), de manière forcée, lors de la détection d'au moins un repère de délimitation (35, 37).

3. Système autonome de transport antichute selon la revendication 1 ou 2, dans lequel la première plage partielle de sûreté (18) comprend un lobe respectif de détection (19, 21) situé à droite et à gauche, approximativement éloigné de part et d'autre de la direction (25) du déplacement de l'unité mobile (13).

4. Système autonome de transport antichute selon l'une des revendications précédentes, dans lequel la distance (7), entre des repères de délimitation (35, 37) voisins, est plus petite qu'une étendue maximale (30) de la première plage partielle de sûreté (18), en particulier approximativement dans le sens transversal vis-à-vis de la direction (25) du déplacement de l'unité mobile (13).

5. Système autonome de transport antichute selon l'une des revendications précédentes, comportant des supports (31, 33) destinés à retenir des repères de délimitation (35, 37) et agencés et/ou implantés de façon telle qu'un repère de délimitation (35, 37) ne puisse être détecté que par la zone détectrice (17) d'une unité mobile (13) située à proximité directe dans l'espace.

6. Système autonome de transport antichute selon la revendication 5, dans lequel les supports (31, 33) sont munis de moyens d'occultation (32, 34) affectés aux repères de délimitation (35, 37) et se présentant respectivement, en particulier, comme des cavités réceptrices ou des coiffes latérales qui s'opposent à une détection, éloignée dans l'espace, par le dispositif (15) d'exploration spatiale d'une unité mobile (13).

7. Système autonome de transport antichute selon l'une des revendications précédentes, dans lequel au moins deux repères de délimitation (35, 37) sont placés en vis-à-vis, dans la zone de déplacement (9), devant une zone de chute (5) notamment configurée en un tunnel.

8. Système autonome de transport antichute selon l'une des revendications précédentes, dans lequel
a) la zone détectrice (17) présente une seconde plage partielle de sûreté (18) à proximité quasi directe de la direction (25) du déplacement de l'unité mobile (13), et
b) le dispositif de commande (14) provoque la mise à l'arrêt provisoire de l'unité mobile (13), de manière forcée, lorsque le dispositif (15) d'exploration spatiale détecte un corps situé dans la seconde plage partielle de sûreté (18).
